# EUROPÄISCHE PATENTSCHRIFT

(11) **EP 3 014 968 B1**
(45) Veröffentlichungstag und Bekanntmachung des Hinweises auf die Patenterteilung: **20.09.2017**
(21) Anmeldenummer: 15188928.4
(22) Anmeldetag: 08.10.2015
(51) Int. Cl.: A01C 7/10, G01F 1/66, A01C 7/08, G01F 1/74

(54) **LANDWIRTSCHAFTLICHE AUSBRINGMASCHINE**
AGRICULTURAL APPLICATION MACHINE
MACHINE D'APPLICATION AGRICOLE

(30) Priorität: 31.10.2014 DE 102014016213
(43) Veröffentlichungstag der Anmeldung: 04.05.2016
(73) Patentinhaber: PÖTTINGER Landtechnik GmbH, 4710 Grieskirchen (AT)
(72) Erfinder: Sandberger, Georg, 4020 Linz (AT); Pöttinger, Klaus, 4710 Grieskirchen (AT); Zauner, Thomas, 4076 St. Marienkirchen (AT)
(74) Vertreter: Thoma, Michael

(56) Entgegenhaltungen:
- EP-A1- 2 832 204
- DE-A1- 2 901 767
- DE-A1- 19 723 137
- FR-A1- 2 780 500
- US-A- 3 906 780
- US-A- 4 057 709
- US-A1- 2012 227 647

## Beschreibung

Die vorliegende Erfindung betrifft eine landwirtschaftliche Ausbringmaschine zum Ausbringen von körnigem Gut, insbesondere Saatgut- und/oder Düngerkörnern, mit Förderleitungen zum Fördern des Guts zu Ausbringelementen, mittels derer das Gut auf/in den Boden ablegbar ist, wobei zumindest einer Förderleitung eine akustische Erfassungseinrichtung mit zumindest einem Mikrofon zum akustischen Erfassen des Gutdurchgangs durch die Förderleitung zugeordnet ist.

Bei landwirtschaftlichen Ausbringmaschinen wie Sämaschinen und/oder Düngerstreuern ist es bekannt, die Körnerzahl, die durch Saatgutleitungen zu Ausbringelementen gelangt und über diese am Boden abgelegt werden, zu erfassen, um den Saatgutaustrag insbesondere beim Einzelkornaustrag möglichst genau steuern zu können. Hierbei werden nicht nur die absolute Körnerzahl, sondern auch die zeitliche Abfolge des Austrags der einzelnen Körner erfasst, um durch Steuerungsmaßnahmen ggf. eingreifen zu können. So soll beispielsweise geschwindigkeitsabhängig der zeitliche Abstand der aus einem Särohr ausgetragenen Körner möglichst gleichmäßig sein, um einen definierten Abstand der abgelegten Körner voneinander zu erreichen.

Zur Körnererfassung werden hierbei verschiedene Maßnahmen eingesetzt. Beispielsweise können Bilderfassungseinrichtungen, die Kameras aufweisen, zum Zählen der Körner und Bestimmen der zeitlichen Abfolge eingesetzt werden, vgl. beispielsweise WO 2005/096799 A1, WO 2005/096798 A1 oder DE 10 2006 034 802 A1.

Aus der EP 1 566 089 A1 ist es bekannt, im Steigrohr zum Verteilerkopf der Sämaschine eine Sensoreinheit mit mehreren Lichtschranken vorzusehen, die mittels Lichtemitter und Lichtdetektor Saatgutkörner optisch zählt.

Ferner ist es aus der DE 29 01 767 bekannt, den Gutdurchsatz durch ein zum Säschuh führendes Fallrohr akustisch zu erfassen. Hierzu wird am Ende des Fallrohrs unmittelbar stromab von dessen Ausgang eine Prallplatte angebracht, die sich schräg zur Längsachse des Rohrs erstreckt, so dass die aus dem Fallrohr fallenden Körner gegen die Prallplatte prallen und von dieser abgelenkt werden. Ein an der Prallplatte angebrachtes Mikrofon erfasst die Aufprallgeräusche, woraus auf einen ausreichenden Gutstrom rückgeschlossen werden kann. Werden die erfassten Geräusche zu leise oder bleiben sie aus, wird davon ausgegangen, dass kein ausreichender Gutstrom mehr aus den Fallrohren austritt. Diese vorbekannte akustische Erfassungsvorrichtung ist jedoch in mehrfacher Hinsicht nachteilig. Zum einen tritt durch die Prallplatte am Austritt der Fallrohre eine schwer kontrollierbare Ablenkung ein, die den weiteren Weg der Körner kaum vorhersagbar macht und insofern an sich nur für Streuer geeignet ist, bei denen die aus einem Fallrohr kommenden Körner über eine Streuscheibe weit weg geschleudert werden. Für Sämaschinen mit definierter Einzelkornablage ist die genannte Vorrichtung kaum geeignet. Zum anderen führt die Erfassung des Gutstroms am Fallrohraustritt je nach Länge der Körnerleitung zu einer mehr oder minder großen Zeitverzögerung, um beispielsweise eine Verstopfung am Verteilerkopfausgang zu erfassen. Schließlich ist auch die Genauigkeit der Körnererfassung mit dieser akustischen Messvorrichtung begrenzt, da an der Prallplatte am Fallrohrausgang unmittelbar über der Streuscheibe diverse Nebengeräusche, insbesondere von der Streuscheibe her kommend miterfasst werden.

Die US 4,057,709 offenbart eine Ausbringmaschine gemäß dem Oberbegriff des Anspruchs 1. Der vorliegenden Erfindung liegt daher die Aufgabe zugrunde, eine verbesserte landwirtschaftliche Ausbringmaschine der genannten Art zu schaffen, die Nachteile des Standes der Technik vermeidet und Letzteren in vorteilhafter Weise weiterbildet. Insbesondere soll eine verschmutzungsresistente, dauerhaft präzise Körnererfassung erreicht werden, bei der die akustische Erfassungseinrichtung montagefreundlich und vorzugsweise auch nachrüstbar ausgebildet ist.

Erfindungsgemäß wird die genannte Aufgabe durch eine Ausbringmaschine gemäß Anspruch 1 gelöst. Bevorzugte Ausgestaltungen der Erfindung sind Gegenstand der abhängigen Ansprüche.

Es wird also vorgeschlagen, für die akustische Körnererfassung keine speziellen, von der normalen Förderleitung verschiedene Prallflächenelemente vorzusehen, sondern Aufprallgeräusche der Körner an der normalen Förderleitungswand zu erfassen. Erfindungsgemäß ist das zumindest eine Mikrofon der akustischen Erfassungseinrichtung außerhalb der Förderleitung angeordnet, die unterbrechungsfrei mit stetigem Wandungsverlauf an dem Mikrofon vorbeigeführt ist. Durch Verwendung der Leitungswandung, die hierfür unverändert und nicht unterbrochen bleiben kann, als Prallfläche und Geräuscherzeugungskorpus kann das Mikrofon an nahezu beliebiger Stelle entlang der Förderleitung angebracht werden. Je nachdem, ob der Gutstrom nahe den Ausbringelementen erfasst werden soll, beispielsweise um die Körnerablage und deren Beabstandung möglichst genau erfassen zu können, oder der Gutstrom am Verteilerkopfausgang überwacht werden soll, um dort Verstopfungen schnell erkennen zu können, kann das Mikrofon - oder ggf. auch mehrere Mikrofone - an verschiedenen Stellen der Förderleitung angebracht werden. Der normale, an sich gegebene Verlauf der Förderleitung beispielsweise vom Verteilerkopf zum Ausbringelement braucht hierfür nicht verändert werden.

Insbesondere brauchen keine Wandungsstücke der Förderleitung ersetzt und durch Mikrofonmembrane und dergleichen ersetzt werden, sondern die Förderleitung kann am Mikrofon mit gleichbleibender Wandstärke und gleichbleibendem Material wie an den übrigen Leitungsabschnitten vorbeigeführt werden. Die Förderleitung kann im Bereich des Mikrofons hinsichtlich Wandstärke, Leitungsquerschnitt, Leitungsmaterial und Wandungskonturierung unverändert bleiben und den entsprechenden Durchschnittswerten der Förderleitung an anderen Abschnitten entsprechen.

Die Förderleitung kann hierbei als Kunststoffschlauch, vorzugsweise Hartkunststoffschlauch oder Metallrohr ausgebildet sein, wobei auch Mischformen beispielsweise in Form eines Kunststoff überzogenen Metallkernrohrs Verwendung finden können.

Um in die Förderleitung eingeleitete Maschinenvibrationen und Umgebungsgeräusche die akustische Erfassung nicht zu sehr beeinträchtigen zu lassen, ist gemäß der Erfindung das Mikrofon an einem schall- und schwingungsdämpfenden Koppelelement angebracht, mittels dessen das Mikrofon an der Förderleitungs-Außenseite angebracht bzw. gehalten werden kann.

Das genannte Koppelelement umgreift hierbei die Förderleitung an dessen Außenseite zumindest teilweise, wobei das als Dämpfer ausgebildete Koppelelement insbesondere flächig auf der Förderleitung sitzen und flächig mit dieser verbunden sein kann, um unmittelbar in Mikrofonumgebung Leitungsschwingungen zu dämpfen.

Insbesondere kann das genannte Koppelelement eine muffenartige Dämpferhülse bilden, die auf der Förderleitung sitzt bzw. durch die die Förderleitung hindurchgeführt ist, wobei die genannte Dämpferhülse die Förderleitungs-Außenseite fest umgreifen bzw. damit formschlüssig bzw. flächig in Eingriff stehen kann. Die genannte Dämpferhülse kann hierbei ringförmig geschlossen ausgebildet sein oder alternativ auch nach Art einer Schlitzhülse umfangsseitig offen ausgebildet sein. Hierdurch kann die Dämpferhülse und damit das Mikrofon ggf. auch nachträglich quer auf eine bereits montierte Förderleitung aufgeschoben werden, insbesondere bei nachgiebiger und/oder elastischer Ausbildung des Koppelelements. Gegebenenfalls kann das Koppelelement auch mehrstückig ausgebildet sein, um ein solches Queraufsetzen des Koppelelements auf die Förderleitung zu ermöglichen. Hierdurch wird das Nachrüsten der akustischen Erfassungseinrichtung an schon bestehenden Ausbringmaschinen erleichtert.

Ist das genannte Koppelelement in der genannten Weise als Dämpferhülse ausgebildet, kann diese Dämpferhülse eine umfangsseitige Aufnahmeausnehmung zum Aufnehmen des zumindest einen Mikrofons aufweisen, welche Aufnahmeausnehmung zum Hülseninnenraum und/oder zur Förderleitung hin offen ausgebildet sein kann, um Aufprallgeräusche der Körner an die Förderleitungswandung ungedämpft an das Mikrofon zu übertragen.

Das genannte schall- und schwingungsdämpfende Koppelelement kann in Weiterbildung der Erfindung einen massiven Schalldämpferkorpus aus schalldämpfenden Material aufweisen, welches in geeigneter Weise schwingungs-und schalldämpfend ist und üblicherweise ein relativ großes spezifisches Gewicht besitzen und schallschluckend sein kann. Beispielsweise kann der massive Schalldämpferkorpus aus Bitumen bestehen.

Um die Aufprallgeräusche der Körner im Bereich des Mikrofons zu verstärken, kann das Mikrofon im Bereich eines bogenförmig gekrümmten Leitungsabschnitts angebracht sein, vorzugsweise auf der Kurvenaußenseite dieses bogenförmigen Leitungsabschnitts, so dass die in diesem bogenförmigen Leitungsabschnitt sozusagen aus der Kurve getragenen Leitungskörner unmittelbar an der Leitungswand auf der Kurvenaußenseite anschlagen, wobei das Mikrofon unmittelbar über dieser Leitungswand an der Kurvenaußenseite liegt.

Der genannte bogenförmig gekrümmte Leitungsabschnitt kann ein im normalen Leitungsverlauf vorgesehener Leitungsbogen sein und braucht nicht eigens für die akustische Körnerdetektion vorgesehen werden. Selbstverständlich kann ein solcher kurvenförmig gekrümmter Leitungsabschnitt jedoch auch speziell vorgesehen werden, beispielsweise durch eine Schlauchbogenführung, um an einer speziell gewünschten Leitungsstelle das Mikrofon positionieren zu können.

Um die Erfassungsgenauigkeit weiter zu erhöhen und ungewünschte Störgeräusche aus der Umgebung oder durch Leitungsvibrationen zu eliminieren bzw. zu reduzieren, kann in Weiterbildung der Erfindung eine mit dem Mikrofon verbundene Auswerteeinrichtung ein Filterelement zum Herausfiltern von gutstromfremden Störsignalen aus dem Mikrofonsignal aufweisen. Insbesondere können durch ein solches Filterelement solche Störgeräusche herausgefiltert werden, die von dem zuvor beschriebenen Dämpferelement nicht weggedämpft werden können und/oder nicht durch den Gutstrom erzeugt werden können, der unter vorbestimmten Betriebsbedingungen durch die Förderleitung gefördert wird. Dies lässt sich durch Versuche im Modellbetrieb, beispielsweise in einem schallgedämpften Versuchsraum, in dem in betriebsähnlicher Weise die Saatgut- bzw. Düngerkörner durch die Förderleitung gelassen und die hierbei auftretenden Geräusche untersucht werden. Hierdurch kann ein gutstrombedingtes Geräuschspektrum erfasst und abgespeichert werden, so dass dann außerhalb dieses gutstromspezifischen Geräuschspektrums auftretende Geräusche im tatsächlichen Feldbetrieb herausgefiltert werden können.

Insbesondere kann das genannte Filterelement einen Bandfilter zum Herausfiltern vorbestimmter Frequenzbereiche aufweisen.

Die genannte Auswerteeinrichtung, die die Mikrofonsignale auswertet, kann grundsätzlich verschiedene Auswertungsfunktionen ausführen bzw. verschiedene Auswertebausteine aufweisen. Vorteilhafterweise kann die Auswerteeinrichtung - insbesondere bei Einzelkornsaat bzw. vereinzelter Körnerförderung - eine Körnerzählung und/oder eine Bestimmung der Längsverteilung der Körner, also der geschwindigkeitsabhängigen Beabstandung bzw. der Körnerbeabstandung pro Zeiteinheit vorsehen.

Alternativ oder zusätzlich zu einem solchen Körnerzähler und/oder Längsverteilungsbestimmer kann die Auswerteeinrichtung auch einen Verstopfungserfasser zum Erfassen einer Verstopfung in der jeweiligen Förderleitung und/oder zur Detektion einer Verstopfung des Verteilerkopfausgangs umfassen.

Die Erfindung wird nachfolgend anhand eines Ausführungsbeispiels und zugehöriger Zeichnungen näher erläutert. In den Zeichnungen zeigen:
- Fig. 1:: eine schematische, perspektivische Darstellung einer Ausbringmaschine in Form einer Sämaschine nach einer bevorzugten Ausführung der Erfindung,

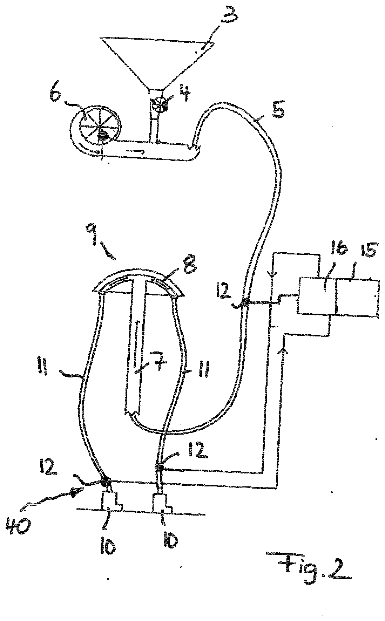

- Fig. 2:: eine schematische Darstellung des Wegs des Körneraustrags und der hierbei wirksamen Maschinenkomponenten der Ausbringmaschine aus Fig. 1,
- Fig. 3:: eine teilweise geschnittene Darstellung der Anbringung des Mikrofons der akustischen Erfassungseinrichtung an der Außenseite einer Förderleitung mittels einer das Mikrofon aufnehmenden Dämpferhülse, und
- Fig. 4:: eine schematische Seitenansicht des Förderleitungsverlaufs zur Verdeutlichung der Anbringung des Mikrofons in einem bogenförmig gekrümmten Förderleitungsabschnitt an dessen Kurvenaußenseite.

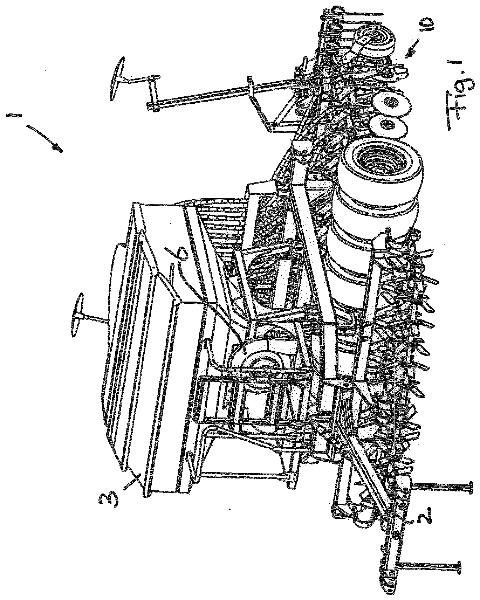

Wie Fig. 1 zeigt, kann die Ausbringmaschine 1 einen Körnerspeicher 3 umfassen, aus dem durch eine zentrale Dosiervorrichtung 4 eine gewünschte Körnermenge in Form von Saatgutkörnern, Düngemittelkörnern und dergleichen in eine Förderleitung 5 gegeben werden kann. Beispielsweise mittels eines mit dem Förderkanal 5 verbindbaren Gebläses 6 kann das von der Dosiervorrichtung 4 bereitgestellte Körnergut über den Förderkanal 5 und ein damit verbundenes Steigrohr 7 in den Verteilerkopf 8 eines Saatgutverteilers 9 gefördert werden, der das ankommende Körnergut auf eine Mehrzahl von Ausbringelementen 10 verteilt, mit denen der Verteilerkopf 8 über Förderleitungen 11 verbunden sein kann. Die genannten Ausbringelemente 10 können beispielsweise Säschare sein, vgl. Fig. 1.

Zwischen dem Verteilerkopf 8 und den Ausbringelementen 10 kann ferner eine Vereinzelungsvorrichtung vorgesehen sein, die an oder vor den Ausbringelementen 10 oder an oder kurz nach dem Verteilerkopf 8 vorgesehen sein kann.

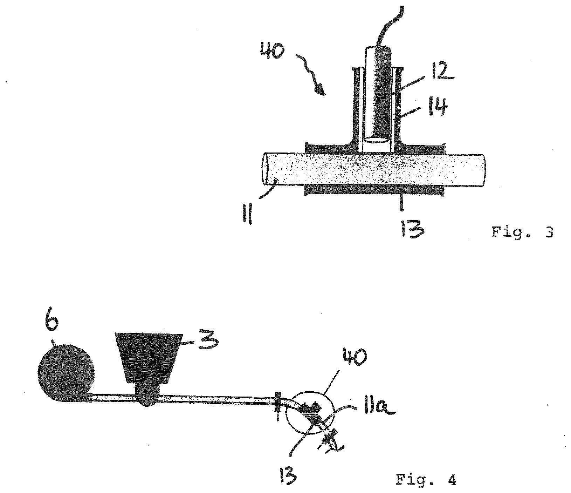

Wie die Figuren 3 und 4 verdeutlichen, sind den Förderleitungen 11 jeweils Mikrofone 12 einer akustischen Erfassungseinrichtung 40 zugeordnet, wobei die Mikrofone 12 grundsätzlich an verschiedenen Abschnitten der Förderleitungen 11, beispielsweise näher zu den Ausbringelementen 10 hin oder näher zum Verteilerkopf 8 hin, insbesondere auch stromab der Vereinzelungsvorrichtung vorgesehen sein können. Alternativ oder zusätzlich zu solchen den Förderleitungen 11 zugeordneten Mikrofonen 12 können ein oder mehrere Mikrofone 12 auch der Förderleitung 5 stromauf des Verteilerkopfes zugeordnet sein, um dort generell die Gutstromförderung zu überwachen.

Wie Fig. 3 zeigt, ist das Mikrofon 12 mittels eines geräusch- und vibrationsdämpfenden Koppelelements 13 an der Förderleitung 11 angebracht, wobei das genannte Koppelelement 13 eine massive, ggf. geschlitzte Dämpferhülse bilden kann, die flächig auf der Außenmantelfläche der Förderleitung 11 sitzen kann. Die genannte Förderleitung 11 erstreckt sich hierbei ohne besondere Maßnahmen an seiner Wandung, insbesondere mit gleichbleibendem Querschnitt und gleichbleibender Wandstärke durch das Koppelelement 13 hindurch und damit am Mikrofon 12 vorbei.

Das hülsenförmige Koppelelement 13 besitzt zur Aufnahme des Mikrofons 12 umfangsseitig eine Aufnahmeausnehmung 14, die beispielsweise als radiale, nach innen hin offene Bohrung ausgebildet sein kann, so dass im Bereich der Aufnahmeausnehmung 14 die Wandung der Förderleitung 11 offen liegt und direkt dem Mikrofon 12 ohne Zwischenschaltung von dämpfendem Koppelelementmaterial zugewandt ist.

Das genannte Koppelelement 13 ist aus einem schwingungs- und geräuschdämpfenden Material ausgebildet, insbesondere Bitumen oder einem anderen geeigneten Schwerstoffmaterial, welches nicht nur geräuschdämmend, sondern auch vibrationsdämpfend wirkt. Insbesondere kann das Material des Koppelelements deutlich schwerer als das Material der Förderleitungen ausgebildet sein, um auch Vibrationen der Förderleitungen zu dämpfen.

Wie Fig. 4 zeigt, kann das Mikrofon 12 hierbei vorteilhafterweise im Bereich eines bogenförmig gekrümmten Förderleitungsabschnitts angeordnet sein, insbesondere auf dessen Kurvenaußenseite, an die die Körner gegen die Förderleitungswandung prallen. Hierdurch sitzt das Mikrofon 12 unmittelbar über einem Förderleitungs-Wandungsabschnitt, gegen den durch die Förderleitung geförderte Körner bevorzugt anprallen.

Wie Fig. 3 andeutet, ist eine mit dem Mikrofon 12 verbundene Auswerteeinrichtung 15 vorgesehen, um das Mikrofonsignal in gewünschter Weise auszuwerten. Die genannte Auswerteeinrichtung 15 kann hierbei ein Filterelement 16 zum Herausfiltern von gutstromfremden Störsignalen aus dem Mikrofonsignal aufweisen, um die Auswertegenauigkeit zu erhöhen. Das genannte Filterelement 16 kann insbesondere einen Bandpassfilter zum Herausfiltern vorbestimmter Frequenzbereiche umfassen.

Die genannte Auswerteeinrichtung 15 kann verschiedene Bausteine zur Bestimmung verschiedener Ausbringparameter aufweisen, beispielsweise einen Körnerzähler, einen Längsverteilungsbestimmer, einen Verstopfungsdetektor oder einen Durchsatzmengenbestimmer, wobei die genannten Bausteine vorteilhafterweise in Form von Softwarebausteinen ausgebildet sein können.

## Patentansprüche

1. Ausbringmaschine zum Ausbringen von körnigem Gut, insbesondere Saatgut- und/oder Düngerkörnern, mit Förderleitungen (11) zum Fördern des Guts von einem Verteilerkopf (8) zu Ausbringelementen (10), mittels derer das Gut auf/in den Boden ablegbar ist, wobei zumindest einer Förderleitung (11) eine akustische Erfassungseinrichtung (40) mit zumindest einem Mikrofon (12) zum akustischen Erfassen des Gutdurchgangs durch die Förderleitung (11) zugeordnet ist, wobei das Mikrofon (12) außerhalb der Förderleitung (11) angeordnet ist, die unterbrechungsfrei mit gleichartig bleibender Wandungsausbildung an dem Mikrofon vorbeigeführt ist, wobei das Mikrofon (12) an einem schall- und schwingungsdämpfenden Koppelelement (13) angebracht ist, das die Förderleitung (11) an dessen Außenseite zumindest teilweise umgreift, **dadurch gekennzeichnet, dass** die Leitungswandung der Förderleitung (11) unterbrechungsfrei ausgebildet und das Mikrofon (12) an verschiedenen Stellen entlang der Förderleitung (11) anbringbar ist.

2. Ausbringmaschine nach dem vorhergehenden Anspruch, wobei das Koppelelement (13) eine Dämpferhülse bildet, durch die die Förderleitung (11) hindurchgeführt ist und die umfangsseitig eine Aufnahmeausnehmung (14) zum Aufnehmen des Mikrofons (12) aufweist, welche Aufnahmeausnehmung zum Hülseninnenraum und/oder zur Förderleitung (11) hin offen ist.

3. Ausbringmaschine nach einem der beiden vorhergehenden Ansprüche, wobei das Koppelelement (13) flächig auf der Förderleitung (11) sitzt.

4. Ausbringmaschine nach einem der vorhergehenden Ansprüche, wobei das Koppelelement (13) einen massiven Schalldämpferkorpus aus schalldämpfenden Schwerstoffmaterial, insbesondere aus Bitumen, aufweist.

5. Ausbringmaschine nach einem der vorhergehenden Ansprüche, wobei eine mit dem Mikrofon (12) verbundene Auswerteeinrichtung (15) ein Filterelement (16) zum Herausfiltern von gutstromfremden Störsignalen aus dem Mikrofonsignal aufweist.

6. Ausbringmaschine nach dem vorhergehenden Anspruch, wobei das Filterelement (16) einen Bandpassfilter zum Herausfiltern vorbestimmter Frequenzbereiche aufweist.

7. Ausbringmaschine nach einem der vorhergehenden Ansprüche, wobei das Mikrofon (12) auf der Kurvenaußenseite eines bogenförmig gekrümmten Leitungsabschnitts (11a) der Förderleitung (11) angebracht ist.

8. Ausbringmaschine nach einem der vorhergehenden Ansprüche, wobei die/eine mit dem Mikrofon (12) verbundene Auswerteeinrichtung (15) einen Körnerzähler zum Bestimmen der Körnerzahl aus dem Mikrofonsignal und/oder einen Längsverteilungsbestimmer zum Bestimmen der Längsverteilung der durch die Förderleitung (11) geförderten Körner aus dem Mikrofonsignal aufweist.

9. Ausbringmaschine nach einem der vorhergehenden Ansprüche, wobei die/eine mit dem Mikrofon (12) verbundene Auswerteeinrichtung (15) einen Verstopfungsdetektor zum Bestimmen einer Verstopfung in der Förderleitung (11) und/oder zum Bestimmen einer Verstopfung in einem Verteilerkopfauslass aus dem Mikrofonsignal aufweist.

10. Ausbringmaschine nach einem der vorhergehenden Ansprüche, wobei die/eine mit dem Mikrofon (12) verbundene Auswerteeinrichtung (15) einen Durchsatzbestimmer zum Bestimmen der durch die Förderleitung (11) geförderten Körnermenge aus dem Mikrofonsignal aufweist.

## Claims

1. Application machine for applying granular goods, in particular seeds and/or fertilizer grains, with conveyor lines (11) for conveying the goods from a distributor head (8) to application elements (10), by means of which the goods can be laid on/in the ground, wherein an acoustic detection device (40) having at least one microphone (12) for acoustically detecting the goods run-through the conveyor line (11) is assigned to at least one conveyor line (11), wherein the microphone (12) is arranged outside the conveyor line (11) which is guided past the microphone contiguously at a uniform wall configuration, wherein the microphone (12) is attached to a sound-absorbing and vibration-reducing coupling element (13) which at least partially encompasses the conveyor line (11) on the outer side thereof, **characterized in that** the line wall of the conveyor line (11) is formed without interruptions and **in that** the microphone (12) is attachable at various positions along the conveyor line (11).

2. Application machine according to the preceding claim, wherein the coupling element (13) forms a damping sleeve through which the conveyor line (11) is lead and which, on the peripheral side, comprises a reception recess (14) for receiving the microphone (12), which reception recess is open toward the sleeve interior and/or toward the conveyor line (11).

3. Application machine according to one of the two preceding claims, wherein the coupling element (13) rests against the conveyor line (11) in a planar fashion.

4. Application machine according to one of the preceding claims, wherein the coupling element (13) comprises a solid sound absorber body made of sound-absorbing heavy medium material, in particular bitumen.

5. Application machine according to one of the preceding claims, wherein an evaluation device (15) connected to the microphone (12) comprises a filter element (16) for filtering interfering non-grain-flow signals from the microphone signal.

6. Application machine according to the preceding claim, wherein the filter element (16) comprises a bandpass filter for filtering predetermined frequency ranges.

7. Application machine according to one of the preceding claims, wherein the microphone (12) is attached on the outer side of the curve of an arcuate line section (11a) of the conveyor line (11).

8. Application machine according to one of the preceding claims, wherein the/an evaluation device (15) connected to the microphone (12) comprises a grain counter for determining the number of grains from the microphone signal and/or a longitudinal distribution determination device for determining the longitudinal distribution of the grains conveyed through the conveyor line (11).

9. Application machine according to one of the preceding claims, wherein the/an evaluation device (15) connected to the microphone (12) comprises a clog detector for determining a clogging in the conveyor line (11) and/or for determining a clogging in a distributor head outlet from the microphone signal.

10. Application machine according to one of the preceding claims, wherein the/an evaluation device (15) connected to the microphone (12) comprises a throughput determination device for determining the number of grains conveyed through the conveyor line (11) from the microphone signal.

## Revendications

1. Machine d'ensemencement destinée à distribuer des produits en grain, notamment des semences et/ou des granulés d'engrais, comprenant des conduites de transport (11) destinées à transporter le produit d'une tête de distribution (8) vers des éléments de répartition (10) au moyen desquels le produit peut être posé sur/dans le sol, un dispositif d'enregistrement (40) acoustique muni d'au moins un microphone (12) pour l'enregistrement acoustique du passage du produit à travers la conduite de transport (11) étant associé à au moins une conduite de transport (11), le microphone (12) étant disposé à l'extérieur de la conduite de transport (11), laquelle est guidée sans interruption, avec réalisation de paroi restant identique, en passant devant le microphone, le microphone (12) étant placé sur un élément de couplage (13) amortissant le bruit et les vibrations, lequel entoure la conduite de transport (11) au moins en partie sur son côté extérieur, **caractérisée en ce que** la paroi de conduite de la conduite de transport (11) est réalisée sans interruption et **en ce que** le microphone (12) peut être placé à différents endroits le long de la conduite de transport (11).

2. Machine d'ensemencement selon la revendication précédente, l'élément de couplage (13) formant une douille d'amortisseur à travers laquelle la conduite de transport (11) est guidée et présentant côté circonférence un évidement de logement (14) destiné à loger le microphone (12), lequel évidement de logement est ouvert en direction de l'espace intérieur de douille et/ou de la conduite de transport (11).

3. Machine d'ensemencement selon l'une quelconque des deux revendications précédentes, l'élément de couplage (13) étant placé sur toute sa surface sur la conduite de transport (11).

4. Machine d'ensemencement selon l'une quelconque des revendications précédentes, l'élément de couplage (13) présentant un corps massif d'amortisseur de bruit en matière lourde amortissant le bruit, notamment en bitume.

5. Machine d'ensemencement selon l'une quelconque des revendications précédentes, un dispositif d'évaluation (15) relié au microphone (12) présentant un élément filtrant (16) destiné à filtrer des signaux parasites étrangers au flux du produit à partir du signal du microphone.

6. Machine d'ensemencement selon la revendication précédente, l'élément filtrant (16) présentant un filtre de passe-bas destiné à filtrer des plages de fréquence prédéterminées.

7. Machine d'ensemencement selon l'une quelconque des revendications précédentes, le microphone (12) étant placé sur le côté extérieur de courbe d'une section de conduite (11a) de la conduite de transport (11), courbée en forme d'arc.

8. Machine d'ensemencement selon l'une quelconque des revendications précédentes, le/un dispositif d'évaluation (15) relié au microphone (12) présentant un compteur de graines pour déterminer le nombre de graines à partir du signal du microphone et/ou un dispositif de détermination de la répartition en longueur destiné à déterminer, à partir du signal du microphone, la répartition en longueur des graines transportées à travers la conduite de transport (11).

9. Machine d'ensemencement selon l'une quelconque des revendications précédentes, le/un dispositif d'évaluation (15) relié au microphone (12) présentant un détecteur d'engorgement destiné à déterminer, à partir du signal du microphone, un engorgement dans la conduite de transport (11) et/ou destiné à déterminer un engorgement dans une sortie de la tête de distribution.

10. Machine d'ensemencement selon l'une quelconque des revendications précédentes, le/un dispositif d'évaluation (15) relié au microphone (12) présentant un dispositif de détermination du rendement pour déterminer, à partir du signal du microphone, la quantité de graines transportées à travers la conduite de transport (11).
